# EUROPEAN PATENT APPLICATION

(11) **EP 3 370 429 A1**
(43) Date of publication of application: **05.09.2018**
(21) Application number: 16859627.8
(22) Date of filing: 17.10.2016
(51) Int. Cl.: H04N 21/488, H04N 21/431, H04N 5/66, H04N 21/236, H04N 21/434, H04N 21/8543

(54) **TRANSMISSION DEVICE, TRANSMISSION METHOD, RECEIVER, AND RECEPTION METHOD**

(30) Priority: 28.10.2015 JP 2015212400
(71) Applicant: Sony Corporation, Tokyo 108-0075 (JP)
(72) Inventor: TSUKAGOSHI, Ikuo, Tokyo 108-0075 (JP); TAKABAYASHI, Kazuhiko, Tokyo 108-0075 (JP)
(74) Representative: 2SPL Patentanwälte PartG mbB
(86) International application number: PCT/JP2016/080753
(87) International publication number: WO 2017/073397

(57) **Abstract**

To permit a subtitle to be displayed satisfactorily regardless of a displaying method in the case where a subtitle displaying position is specified in terms of relative position.

Containers of a prescribed format each containing video streams with video data and subtitle streams with subtitle information are transmitted. Information associated with a subtitle displaying position, which is contained in the subtitle information, specifies the subtitle displaying position in terms of relative position. Identifying information that indicates to which region the subtitle displaying position specified by the information associated with the subtitle displaying position is defined in terms of relative position is inserted in the subtitle information. For example, the identifying information indicates whether the subtitle displaying position specified by the subtitle displaying position information is a relative position with respect to a video region displayed on a display, a relative position with respect to the video region, or a relative position with respect to a display region.

## Description

### [Technical Field]

The present technology relates to a transmitting apparatus, a transmitting method, a receiving apparatus, and a receiving method. More particularly, the present technology relates to a transmitting apparatus for transmitting video data together with subtitle information.

### [Background Art]

In the past, it is a common practice for DVB (Digital Video Broadcasting) to transmit subtitle information in the form of bitmap data, for example. However, a new technology has recently been proposed to transmit subtitle information in the form of character code representing texts or in terms of texts. For example, W3C (World Wide Web Consortium) has proposed using TTML (Timed Text Markup Language) for the text information (see PTL 1).

In the past, according to the known practice, the subtitle information contains information associated with a subtitle displaying position that specifies the subtitle displaying position in terms of relative position with respect to the video region. This practice, however, suffers from disadvantage that the subtitle partly juts out from the display region without appearing in the case where there is a discrepancy in the aspect ratio between the video region and the display region, depending on the method of display employed.

### [Citation List]

### [Patent Literature]

[PTL1] JP 2012-169885A

### [Summary]

### [Technical Problem]

It is an object of the present technology to permit the subtitle to appear satisfactorily regardless of the displaying method in the case where the subtitle displaying position is specified in terms of relative position.

### [Solution to Problem]

According to one concept of the present technology, there is provided a transmitting apparatus including a transmitting unit configured to transmit a container of a prescribed format that contains a video stream with video data and a subtitle stream with subtitle information; the subtitle information containing information associated with a subtitle displaying position which is specified in terms of relative position; the transmitting apparatus further including an information inserting unit configured to insert the identifying information that indicates to which region the subtitle displaying position specified by the information associated with the subtitle displaying position is defined in terms of relative position.

According to the present technology, the transmitting unit transmits a container of prescribed format which contains a video stream having video data and a subtitle stream having subtitle information. The container varies in format, including MPEG-2 TS (Transport Stream) and MMT transport stream (which conform to the digital broadcast standard) and ISOBMFF (MP4) in use for internet delivery.

The information associated with a subtitle displaying position, which is contained in the subtitle information, specifies the subtitle displaying position in terms of relative position. The information inserting unit inserts into the subtitle information identifying information that indicates to which region the subtitle displaying position specified by the information associated with the subtitle displaying position is defined in terms of relative position. The identifying information to be inserted into the subtitle information may indicate that the subtitle displaying position specified by the information associated with subtitle displaying position is the relative position with respect to the video region that appears on the display, or with respect to the video region, or with respect to the display region.

For example, the subtitle information may be information associated with text representing a subtitle in a prescribed format. In this case, the information associated with text representing the subtitle in a prescribed format may be that of TTML or TTML-derived format. In addition, the information inserting unit may define a name space to insert identifying information into a tt root container.

As mentioned above, according to the present technology, the identifying information that indicates to which region the subtitle displaying position specified by the information associated with the subtitle displaying position is defined in terms of relative position is inserted in the subtitle information. This makes it possible to display the subtitle satisfactorily regardless of the displaying method. In other words, it is possible to avoid the situation in which the subtitle appears in the black-belt region or the subtitle juts out from the display region making the subtitle partly invisible in the case where there is a discrepancy in the aspect ratio between the video region and the display region and hence display relies on "letter box method" or "center-cut method."

Further, according to another concept of the present technology, there is provided a receiving apparatus including a receiving unit configured to receive a container of a prescribed format that contains a video stream with video data and a subtitle stream with subtitle information; the subtitle information containing information associated with a subtitle displaying position which is specified in terms of relative position; the subtitle information containing identifying information inserted therein that indicates to which region the subtitle displaying position specified by the information associated with the subtitle displaying position is defined in terms of relative position; the receiving apparatus further comprising a control unit configured to control video decoding process to acquire video data by performing a decoding process on the video stream, control subtitle decoding process to acquire bitmap data for a subtitle by performing a decoding process on the subtitle stream, control a display position on the bitmap data for the subtitle on the assumption that the subtitle displaying position specified by the information associated with subtitle displaying position is a relative position with respect to a region indicated by the identifying information inserted into the subtitle information, and control a video superimposing process to superimpose on the video data the bitmap data for the subtitle which has undergone the display position control.

According to the present technology, the receiving unit receives the container of prescribed format which contains the video stream with video data and the subtitle stream with subtitle information. The information associated with subtitle displaying position which is contained in the subtitle information has the subtitle displaying position specified in terms of relative position, and the subtitle information contains the identifying information inserted therein that indicates to which region the subtitle displaying position specified by the information associated with the subtitle displaying position is defined in terms of relative position. The identifying position inserted in the subtitle information may optionally be the one which indicates whether the subtitle displaying position specified by the information associated with subtitle displaying position is a relative position with respect to the video region displayed on the display, a relative position with respect to the video region, or a relative position with respect to the display region.

The decoding process that is performed on the video stream produces the video data. The decoding process that is performed on the subtitle stream produces the bitmap data for the subtitle. The bitmap data for the subtitle undergoes the display position control on the assumption that the subtitle displaying position specified by the information associated with the subtitle displaying position is indicated in terms of relative position with respect to the region indicated by the identifying information inserted into the subtitle information. The bitmap data for the subtitle which has undergone the display position control is superimposed over the video data.

As depicted above, the present technology is intended to perform the display position control on the bitmap data of the subtitle on the assumption that the subtitle displaying position specified by the information associated with the subtitle displaying position is a relative position with respect to the region indicated by the identifying information inserted into the subtitle information. This permits the subtitle to be displayed satisfactorily regardless of the displaying method. In other words, it is possible to avoid the situation in which the subtitle appears in the black-belt region or the subtitle juts out from the display region making the subtitle partly invisible in the case where there is a discrepancy in the aspect ratio between the video region and the display region and hence display relies on "letter box method" or "center-cut method."

Further, according to still another concept of the present technology, there is provided a receiving apparatus including a receiving unit configured to receive a container of a prescribed format that contains a video stream with video data and a subtitle stream with subtitle information; the subtitle information containing information associated with a subtitle displaying position which is specified in terms of relative position; the receiving apparatus further including a control unit configured to control a video decoding process to acquire video data by performing a decoding process on the video stream, control a subtitle decoding process to acquire bitmap data for a subtitle by performing a decoding process on the subtitle stream, control a display position on the bitmap data for the subtitle on the assumption that the subtitle displaying position specified by the information associated with subtitle displaying position is a relative position with respect to a video region displayed on a display, and control a video superimposing process to superimpose on the video data the bitmap data for the subtitle which has undergone the display position control.

According to the present technology, the receiving unit receives the container of prescribed format which contains the video stream with video data and the subtitle stream with subtitle information. The information associated with subtitle displaying position which is contained in the subtitle information has the subtitle displaying position specified in terms of relative position. Here, the information associated with a subtitle displaying position, which is contained in the subtitle information, specifies the subtitle displaying position in terms of relative position.

The decoding process that is performed on the video stream produces the video data. The decoding process that is performed on the subtitle stream produces the bitmap data for the subtitle. The bitmap data for the subtitle undergoes the display position control on the assumption that the subtitle displaying position specified by the information associated with the subtitle displaying position is indicated in terms of relative position with respect to the video region displayed on the display. The bitmap data for the subtitle which has undergone the display position control is superimposed over the video data.

As depicted above, the present technology is intended to perform the display position control on the bitmap data of the subtitle on the assumption that the subtitle displaying position specified by the information associated with the subtitle displaying position is a relative position with respect to the video region displayed on the display. This permits the subtitle to be displayed satisfactorily regardless of the displaying method. In other words, it is possible to avoid the situation in which the subtitle appears in the black-belt region or the subtitle juts out from the display region making the subtitle partly invisible in the case where there is a discrepancy in the aspect ratio between the video region and the display region and hence display relies on "letter box method" or "center-cut method."

### [Advantageous Effect of Invention]

The present technology permits the satisfactory display of the subtitle regardless of the displaying method. It is to be noted that the effects mentioned in this specification are mere illustrations, and they are not intended to restrict the scope of the technology and exclude additional effects.

### [Brief Description of Drawings]

[Fig. 1] Fig. 1 is a block diagram depicting an example of a configuration of a transmitting-receiving system according to an embodiment.
[Fig. 2] Fig. 2 is a diagram depicting an example of subtitle display in the case where a subtitle is displayed at a position which is specified by information associated with a subtitle displaying position in terms of relative position with respect to a display region, on the assumption that the display region has an aspect ratio of 4:3 and a video region has an aspect ratio of 16:9 and the display resorts to the letter box method.
[Fig. 3] Fig. 3 is a diagram depicting an example of subtitle display in the case where a subtitle is displayed at a position which is specified by information associated with a subtitle displaying position in terms of relative position with respect to the video region, on the assumption that the display region has an aspect ratio of 4:3 and the video region has an aspect ratio of 16:9 and the display resorts to the center-cut method.
[Fig. 4] Fig. 4 is a diagram depicting an example of subtitle display in the case where identifying information indicates that a subtitle appears in terms of relative position with respect to the video region on the display, on the assumption that the display region has an aspect ratio of 4:3 and the video region has an aspect ratio of 16:9 and the display resorts to the letter box method.
[Fig. 5] Fig. 5 is a diagram depicting an example of the subtitle display in the case where the identifying information indicates that the subtitle appears in terms of relative position with respect to the video region on the display, on the assumption that the display region has an aspect ratio of 4:3 and the video region has an aspect ratio of 16:9 and the display resorts to the center-cut method.
[Fig. 6] Fig. 6 is a block diagram depicting an example of a configuration of a stream-generating unit in a broadcast transmitting system.
[Fig. 7] Fig. 7 is a diagram depicting an example of a TTML structure.
[Fig. 8] Fig. 8 is a block diagram depicting an example of a configuration of a television receiver.

### [Description of Embodiment]

Hereinafter, a mode for carrying out the invention (hereinafter referred to as "an embodiment") will be described. It should be noted that the description will be given in the following order.

### 1. Embodiment

### 2. Modified Embodiment

### <1. Embodiment>

### [Example of configuration of transmitting-receiving system]

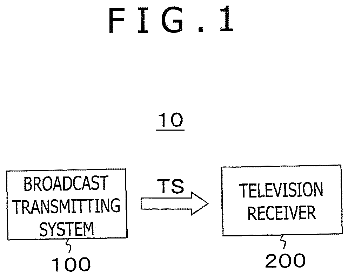

Fig. 1 is a block diagram depicting an example of a configuration of a transmitting-receiving system 10 according to an embodiment. The transmitting-receiving system 10 includes a broadcast transmitting system 100 and a television receiver 200. The broadcast transmitting system 100 transmits the broadcast wave which carries a transport stream of MPEG-2 TS (hereinafter referred to simply as "transport stream TS") as the container (multiplexed stream).

The transport stream TS includes a video stream having video data and a subtitle stream having subtitle information. The subtitle information is a piece of text information in a prescribed format that represents the subtitle. The text information is represented by the TTML format or any other format derived from TTML. The TTML format is used in this embodiment.

The subtitle information includes information associated with a subtitle displaying position, which specifies a subtitle displaying position in terms of relative position (proportional value). The subtitle information has the identifying information inserted therein, which indicates to which region the subtitle displaying position specified by the information associated with the subtitle displaying position is defined in terms of relative position. The identifying information indicates whether the subtitle displaying position specified by the information associated with the subtitle displaying position is a relative position with respect to the video region displayed on the display, a relative position with respect to the video region, or a relative position with respect to the display region. A tt root container of TTML defines a name space to insert the identifying information.

The television receiver 200 receives the transport stream TS which has been transmitted from the broadcast transmitting system 100. The television receiver 200 performs decoding process on the video stream in order to acquire video data and also performs decoding process on the subtitle stream in order to acquire bitmap data for the subtitle. The television receiver 200 performs the display position control on the bitmap data for the subtitle on the assumption that the subtitle displaying position specified by the information associated with the subtitle displaying position is the relative position with respect to the region indicated by the identifying information which is inserted in the subtitle information. In addition, the television receiver 200 superimposes the subtitle bitmap data, which has undergone the display position control, over the video data, thereby acquiring the video data for display.

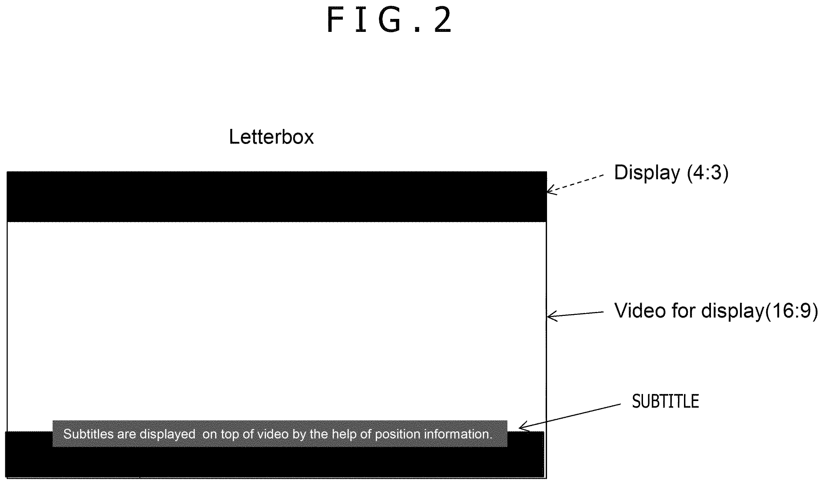

Fig. 2 depicts that there is a possibility that the subtitle is displayed over the entire region of the black belt in the case where the subtitle is displayed at the position which is specified by the information associated with the subtitle displaying position in terms of relative position with respect to the display region, on the assumption that the display region has an aspect ratio of 4:3 and the video region has an aspect ratio of 16:9 and the letter box method is employed for displaying.

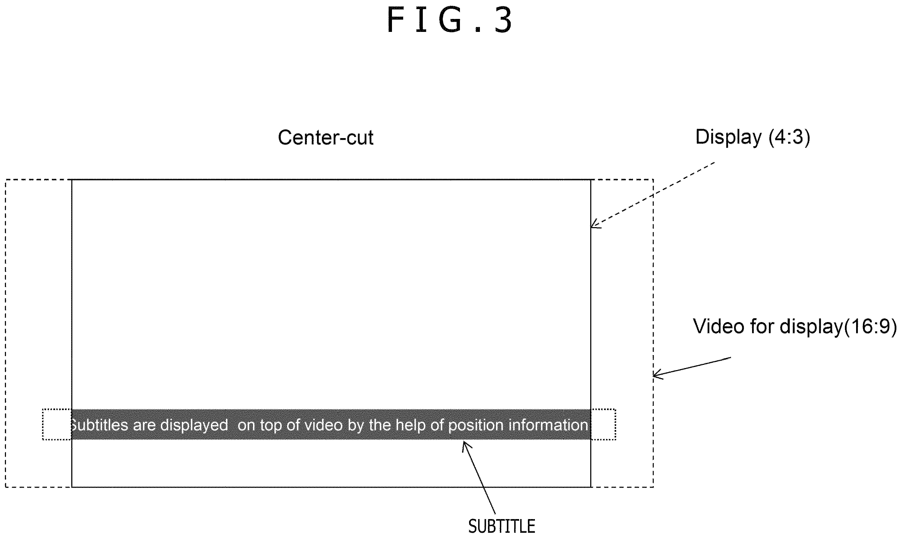

Further, Fig. 3 depicts that there is a possibility that the subtitle juts out from the display region with a portion thereof being not displayed in the case where the subtitle is displayed at the position which is specified by the information associated with the subtitle displaying position in terms of relative position with respect to the video region, on the assumption that the display region has an aspect ratio of 4:3 and the video region has an aspect ratio of 16:9 and the center-cut method is employed for displaying.

The display position control is performed on the bitmap data for the subtitle on the assumption that the subtitle displaying position specified by the information associated with the subtitle displaying position is the relative position with respect to the region indicated by the identifying information inserted into the subtitle information, so that the subtitle can be displayed satisfactorily regardless of the displaying method.

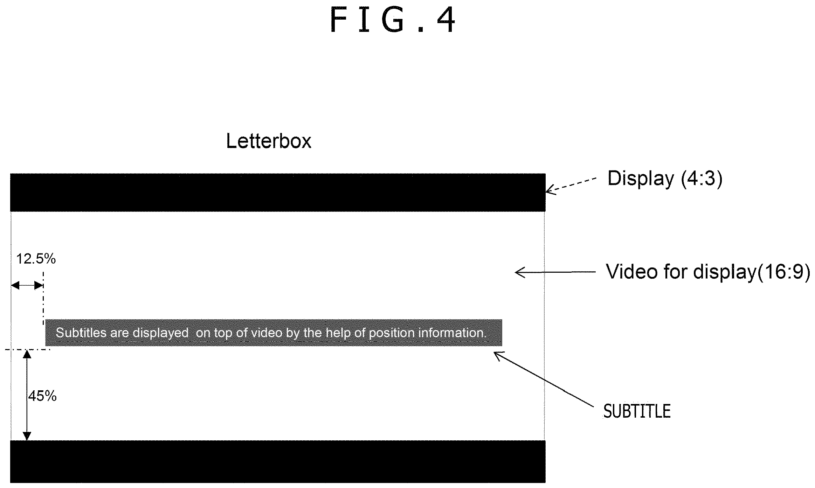

Fig. 4 depicts an example of the subtitle display in the case where the identifying information indicates the relative position with respect to the video region displayed on the display. This example is applicable to the situation in which the display region has an aspect ratio of 4:3 and the video region has an aspect ratio of 16:9 and the letter box method is employed for displaying. In this case, there is no possibility that the subtitle appears in the black belt region. It is to be noted that the example of the subtitle display applies to an instance in which the subtitle displaying position (or the region position) is specified in terms of relative position such that the lower left position is 12.5% from the left and the 45% from the bottom.

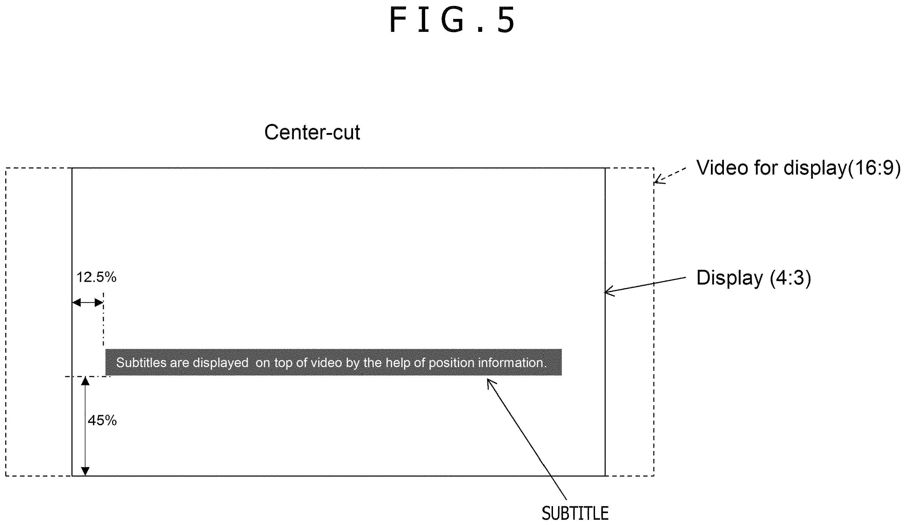

Fig. 5 depicts an example of the subtitle display in the case where the identifying information indicates the relative position with respect to the video region displayed on the display. This example is applicable to the situation in which the display region has an aspect ratio of 4:3 and the video region has an aspect ratio of 16:9 and the center-cut method is employed for displaying. In this case, there is no possibility that the subtitle juts out from the display region. It is to be noted that the example of the subtitle displaying applies to an instance in which the subtitle displaying position (or the region position) is specified in terms of relative position such that the lower left position is 12.5% from the left and the 45% from the bottom.

### [Example of configuration of stream generating unit in broadcast transmitting system]

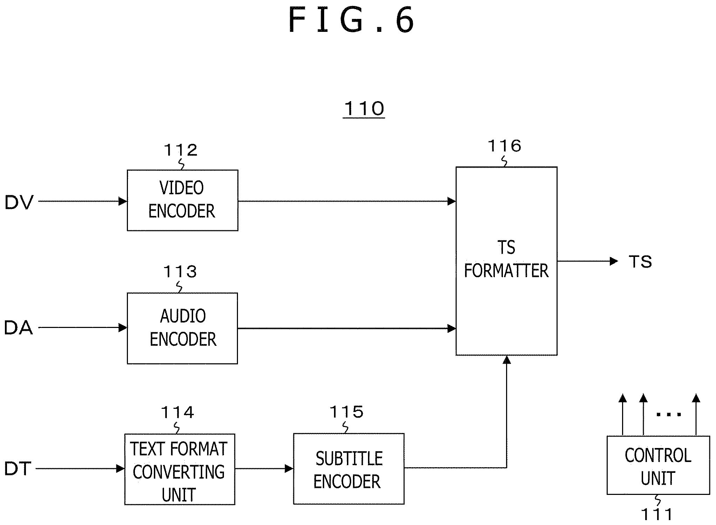

Fig. 6 depicts an example of a configuration of a stream generating unit 110 in the broadcast transmitting system 100. The stream generating unit 110 includes a control unit 111, a video encoder 112, an audio encoder 113, a text format converting unit 114, and a subtitle encoder 115, and a TS formatter (multiplexer) 116.

The control unit 111 has the CPU (Central Processing Unit) that controls the stream generating unit 110 including various parts. The video encoder 112 enters video data DV, thereby encoding the video data DV, and generates a video stream (PES stream) including video PES packets each having the coded video data in the payload.

The audio encoder 113 enters audio data DA, thereby encoding the audio data DA, and generates an audio stream (PES stream) including audio PES packets each having the coded audio data. The text format converting unit 114 enters text data (character code) DT, thereby acquiring TTML (Timed Text Markup Language) as text information for a subtitle.

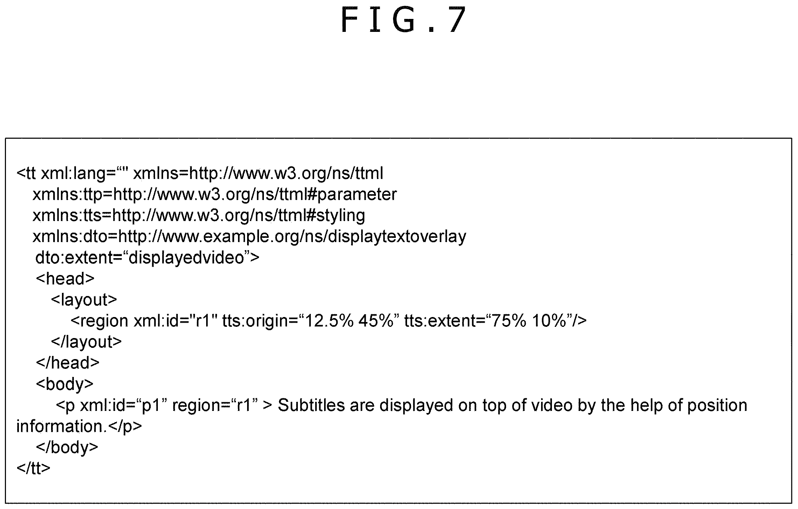

Fig. 7 depicts an example of the structure of TTML. TTML is written on the basis of XML. The tt root container defines the language and name space. The name space is defined as the intrinsic element name that is uniquely identified in all the elements of the system or standard. The name space such as "xmlns=http://www.w3.org/ns/ttml," "xmlns:ttp=http://www.w3.org/ns/ttml#parameter," and "xmlns:tts=http://www.w3.org/ns/ttml#styling," denotes the name space, such as parameter and styling, which is reserved by W3C as the attribute classification of TTML in advance with detailed explanation omitted.

"xmlns:dto=http://www.example.org/ns/displaytextoverlay" is a name space to be newly defined. This name space is intended to insert a specifying parameter as identifying information that indicates to which region a subtitle displaying position (relative position) specified by information associated with the subtitle displaying position contained in the TTML as the subtitle information is defined in terms of relative position. The specifying parameter is inserted into "displayedvideo" in 'dto:extent="displayedvideo."'

For example, entering "1" as the specifying parameter into "displayedvideo" indicates that the subtitle displaying position (relative position) specified by the information associated with the subtitle displaying position is the relative position with respect to the video region that appears on the display. In this case, it is assumed that the caption always appears in the video region that appears on the display.

In other words, there is no possibility that the subtitle appears in the black belt region in the case where the letter box method is employed for display, or there is no possibility that the subtitle juts out from the display region in the case where the center-cut method is employed for display.

Also, for example, entering "2" as the specifying parameter into "displayedvideo" indicates that the subtitle displaying position (relative position) specified by the information associated with the subtitle displaying position is the relative position with respect to the video region. In this case, the subtitle displaying position (relative position) is previously established so that the subtitle does not jut out from the display region even though the center-cut method is employed for display.

Also, for example, entering "3" as the specifying parameter into "displayedvideo" indicates that the subtitle displaying position (relative position) specified by the information associated with the subtitle displaying position is the relative position with respect to the display region. In this case, the subtitle displaying position (relative position) is previously established so that the subtitle does not appear in the black belt region even though the letter box method is employed for display.

It is to be noted that although the foregoing has mentioned entering "1," "2" or "3" into "displayedvideo," they are not restrictive and they may be replaced by any other characters. It is also possible to specify the region in which the subtitle appears by means of characters in place of numerals. In this case, for example, the above "1" may be replaced with characters "displayedvideo," "2" may be replaced with characters "entirevideo," and "3" may be replaced with "monitordisplay."

Also, the TTML structure has the header "head" which contains the elements of the layout. The region ID is represented by "r1," and the information associated with the subtitle displaying position is indicated in terms of the relative positions of the origin of the region and the extent of the region. This example depicts that the origin of the region is 12.5% from the left and 45% from the bottom, and also that the extent of the region has a lateral width of 75% and a vertical width of 10%.

Also, the TTML structure has the body "body" which indicates that XML ID is "p1" and the region ID is "r1" and which also contains text data. The text data herein says "Subtitles are displayed on top of video by the help of position information."

Referring to Fig. 6 again, the subtitle encoder 115 converts the TTML, which has been obtained by the text format converting unit 114, into various segments and generates in the payload the subtitle stream (PES stream) including subtitle PES packets in which these segments (subtitle information) are arranged.

The TS formatter 116 performs multiplexing for conversion into transport packets on the video stream generated by the video encoder 112, the audio stream generated by the audio encoder 113, and the subtitle stream generated by the subtitle encoder 115, thereby producing the transport stream TS in the form of container (multiplexed stream).

The action of the stream generating unit 110 depicted in Fig. 6 is briefly explained below. The video data DV is supplied to the video encoder 112. The video encoder 112 performs encoding on the video data DV, thereby generating the video stream (PES stream) including video PES packets having the encoded image data in the payload. This video stream is supplied to the TS formatter 116.

Also, the audio data DA is supplied to the audio encoder 113. The audio encoder 113 performs encoding on the audio data DA, thereby generating the audio stream (PES stream) including audio PES packets having the encoded voice data. This audio stream is supplied to the TS formatter 116.

Also, the text data (character code) DT is supplied to the text format converting unit 114. The text format converting unit 114 yields the text information, TTML here, of the subtitle in a prescribed format having the display timing information. In this case, a new name space is defined in the tt root container so as to insert the specifying parameter as the identifying information that indicates to which region the subtitle displaying position (relative position) specified by the information associated with the subtitle displaying position contained in TTML is defined in terms of relative position, and the specifying parameter is inserted.

The TTML obtained by the text format converting unit 114 is supplied to the subtitle encoder 115. The subtitle encoder 115 converts the TTML into various segments, thereby generating the subtitle stream including subtitle PES packets having their segments arranged in the payload. This subtitle stream is supplied to the TS formatter 116.

The TS formatter 116 performs multiplexing for conversion into transport packets on the video stream generated by the video encoder 112, the audio stream generated by the audio encoder 113, and the subtitle stream generated by the subtitle encoder 115, thereby producing the transport stream TS in the form of container (multiplexed stream).

### [Example of configuration of television receiver]

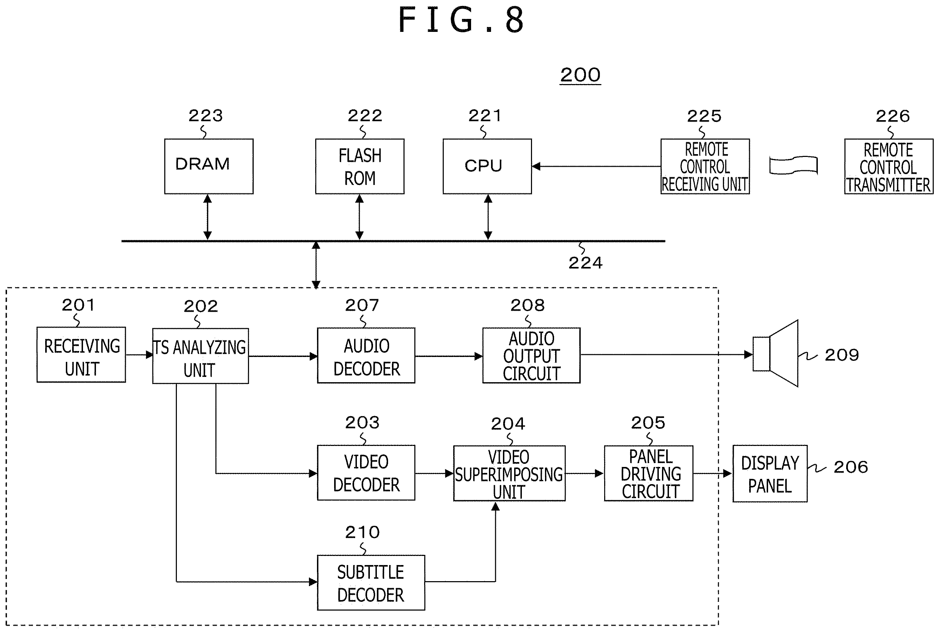

Fig. 8 depicts an example of the configuration of the television receiver 200. The television receiver 200 includes a receiving unit 201, a TS analyzing unit (demultiplexer) 202, a video decoder 203, a video superimposing unit 204, a panel driving circuit 205, and a display panel 206 that functions as a display unit. In addition, this television receiver 200 has an audio decoder 207, an audio output circuit 208, a speaker 209, and a subtitle decoder 210. Moreover, this television receiver 200 has a CPU 221, a flash ROM 222, a DRAM 223, an internal bus 224, a remote control receiving unit 225, and a remote control transmitter 226.

The CPU 221 controls action of various parts in the television receiver 200. The flash ROM 222 stores the control software as well as the data. The DRAM 223 constitutes the work area for the CPU 221. The CPU 221 reads the software and data from the flash ROM 222 and expands them on the DRAM 223, thereby activating the software and controlling various parts in the television receiver 200.

The remote control receiving unit 225 receives the remote control signals (remote control codes) transmitted from the remote control transmitter 226 and supplies them to the CPU 221. The CPU 221 controls various parts in the television receiver 200 according to the remote control codes. There is the internal bus 224 to which are connected the CPU 221, the flash ROM 222, and the DRAM 223.

The receiving unit 201 receives the transport stream TS which is superimposed on the broadcast wave transmitted from the broadcast transmitting system 100. The transport stream TS includes the video stream, audio stream, and subtitle stream, as mentioned above. The TS analyzing unit 202 extracts the PES packets for the audio stream and subtitle stream from the transport stream TS.

The audio decoder 207 performs decoding on the audio PES packets obtained from the TS analyzing unit 202, thereby obtaining audio data. The audio output circuit 208 performs D/A conversion and amplification on the audio data and supplies the resulting data to the speaker 209. The video decoder 203 performs decoding on the video PES packets obtained by the TS analyzing unit 202, thereby obtaining video data.

The subtitle decoder 210 performs decoding on the subtitle PES packets obtained by the TS analyzing unit 202, thereby obtaining the bitmap data of the subtitle in each region to be superimposed on the video data. Here, the subtitle decoder 210 performs the display position control on the bitmap data for the subtitle in each region on the assumption that the subtitle displaying position (relative position) specified by the information associated with the subtitle displaying position which is contained in TTML, in other words, the origin and extent of the region are expressed in terms of relative position with respect to the region indicated by the specifying parameter (specifying information) given by "displayedvideo" (see Fig. 7).

Here, in the case where "displayedvideo" contains "1" as the specifying parameter, the display position control is accomplished on the assumption that the subtitle displaying position (relative position) is the relative position with respect to the video region to be displayed on the display. In addition, in the case where "displayedvideo" contains "2" as the specifying parameter, the display position control is accomplished on the assumption that the subtitle displaying position (relative position) is the relative position with respect to the video region. Further, in the case where "displayedvideo" contains "3" as the specifying parameter, the display position control is accomplished on the assumption that the subtitle displaying position (relative position) is the relative position with respect to the display region.

In Fig. 8 referenced again, the video superimposing unit 204 superimposes the subtitle bitmap data for each region, which is obtained from the subtitle decoder 210, on the video data obtained by the video decoder 203. The panel driving circuit 205 drives the display panel 206 according to the video data for display which is obtained by the video superimposing unit 204. The display panel 206 may be an LCD (Liquid Crystal Display) or an organic EL display (organic electroluminescence display).

The following is a brief description of the action of the television receiver 200 depicted in Fig. 8. The receiving unit 201 receives the transport stream TS which is superimposed on the broadcast wave transmitted from the broadcast transmitting system 100. The transport stream TS includes the video stream, audio stream, and subtitle stream. This transport stream TS is supplied to the TS analyzing unit 202. The TS analyzing unit 202 extracts the PES packets for the video stream, audio stream, and subtitle stream from the transport stream TS.

The video PES packet extracted by the TS analyzing unit 202 is supplied to the video decoder 203. The video decoder 203 performs decoding on the video PES packets, thereby obtaining the video data. In addition, the subtitle PES packet which has been extracted by the TS analyzing unit 202 is supplied to the subtitle decoder 210. The subtitle decoder 210 processes the segment data of each region, thereby obtaining the bitmap data for the subtitle of each region which is to be superimposed on the video data.

At this time, the subtitle decoder 210 performs the display position control on the bitmap data for the subtitle in each region on the assumption that the subtitle displaying position (relative position) specified by the information associated with the subtitle displaying position which is contained in TTML, in other words, the origin and extent of the region are expressed in terms of relative position with respect to the region indicated by the specifying parameter (specifying information) given by "displayedvideo").

The bitmap data of the subtitle for each region, which is output from the subtitle decoder 210, is supplied to the video superimposing unit 204. The video superimposing unit 204 superimposes the bitmap data of the subtitle for each region, which has been output from the subtitle decoder 210, on the video data which has been obtained by the video decoder 203, thereby obtaining the video data for display.

The video data for display which has been obtained by the video superimposing unit 204 is supplied to the panel driving circuit 205. The panel driving circuit 205 drives the display panel 206 according to the video data for display. Thus, the display panel 206 displays the image on which the subtitle is superimposed.

In addition, the audio PES packet which has been extracted by the TS analyzing unit 202 is supplied to the audio decoder 207. The audio decoder 207 performs decoding on the audio PES packet, thereby obtaining the audio data. This audio data is supplied to the audio output circuit 208. The audio output circuit 208 performs such processes as D/A conversion and amplification on the audio data. The thus processed audio data is supplied to the speaker 209. The speaker 209 produces the audio output corresponding to the image which appears on the display panel 206.

As mentioned above, in the transmitting-receiving system 10 depicted in Fig. 1, the broadcast transmitting system 100 inserts the identifying information that indicates to which region the subtitle displaying position specified by the information associated with the subtitle displaying position is defined in terms of relative position into TTML as the subtitle information. As the result, the receiving side is able to display the subtitle satisfactorily regardless of the displaying method only if it performs the display position control on the bitmap data for the subtitle on the assumption that the subtitle displaying position specified by the information associated with the subtitle displaying position is the relative position with respect to the region indicated by the identifying information inserted in the subtitle information.

In other words, it is possible to avoid the situation in which the subtitle appears in the black-belt region or the subtitle juts out from the display region making the subtitle partly invisible in the case where there is a discrepancy in the aspect ratio between the video region and the display region and hence display relies on "letter box method" or "center-cut method."

### <2. Modified Embodiment>

It is to be noted that the foregoing embodiment demonstrates that the TTML as the subtitle information to be received by the television receiver 200 contains the identifying information inserted therein that indicates to which region the subtitle displaying position specified by the information associated with the subtitle displaying position is defined in terms of relative position. However, the foregoing embodiment may possibly be modified such that the television receiver 200 controls the display position on the assumption that the subtitle displaying position specified by the information associated with the subtitle displaying position for the bitmap data of the subtitle is the relative position with respect to the video region displayed on the display even in the case where the TTML as the subtitle information to be received by the television receiver 200 does not contain the identifying information inserted therein.

The television receiver 200 configured in this manner will be able to display the subtitle satisfactorily regardless of the displaying method. That is, it is possible to avoid the situation in which the subtitle appears in the black-belt region or the subtitle juts out from the display region making the subtitle partly invisible in the case where there is a discrepancy in the aspect ratio between the video region and the display region and hence display relies on "letter box method" or "center-cut method."

In addition, it is assumed in the foregoing embodiment that the display region has an aspect ratio of 4:3 and the video region has an aspect ratio of 16:9. However, the modified embodiment can be applied to the case in which the display region and video region have any other aspect ratios than mentioned above.

In addition, the foregoing embodiment employs TTML as the text information for the subtitle in a prescribed format. However, the scope of the present technology is not restricted to it. There is a possibility of using other text information equivalent to TTML. For example, any format derived from TTML may be employed.

Also, the foregoing embodiment illustrates the transmitting-receiving system 10 which includes the broadcast transmitting system 100 and the television receiver 200. It is not intended to restrict the configuration of the transmitting-receiving system to which the present technology is applied. The television receiver 200 may be one which includes a set top box and a monitor which are connected together through a digital interface, such as HDMI (High-Definition Multimedia Interface). It is to be noted that "HDMI" is a registered trademark.

In addition, the foregoing embodiment illustrates an instance in which the container is a transport stream of MPEG-2 TS. Needless to say, the present technology can be applied to an instance in which the container is a transport stream of MMT or DASH/ISOBMFF stream.

In addition, the present technology can adopt the following configurations.
(1) A transmitting apparatus including
   a transmitting unit configured to transmit a container of a prescribed format that contains a video stream with video data and a subtitle stream with subtitle information;
   the subtitle information containing information associated with a subtitle displaying position which is specified in terms of relative position;
   the transmitting apparatus further including
   an information inserting unit configured to insert the identifying information that indicates to which region the subtitle displaying position specified by the information associated with the subtitle displaying position is defined in terms of relative position.
(2) The transmitting apparatus as defined in Paragraph (1) above, in which the identifying information inserted into the subtitle information indicates whether the subtitle displaying position specified by the information associated with the subtitle displaying position is a relative position with respect to a video region displayed on a display, a relative position with respect to the video region, or a relative position with respect to a display region.
(3) The transmitting apparatus as defined in Paragraph (1) or (2) above, in which the subtitle information is text information for a subtitle in a prescribed format.
(4) The transmitting apparatus as defined in Paragraph (3) above, in which the text information for the subtitle in the prescribed format is TTML or a format derived from TTML.
(5) The transmitting apparatus as defined in Paragraph (4) above, in which the information inserting unit defines a name space to insert the identifying information into a tt root container.
(6) A transmitting method including
   a transmitting step of transmitting a container of a prescribed format that contains a video stream with video data and a subtitle stream with subtitle information;
   the subtitle information containing information associated with a subtitle displaying position which is specified in terms of relative position;
   the transmitting method further including
   an information inserting step of inserting identifying information that indicates to which region the subtitle displaying position specified by the information associated with the subtitle displaying position is defined in terms of relative position.
(7) A receiving apparatus including
   a receiving unit configured to receive a container of a prescribed format that contains a video stream with video data and a subtitle stream with subtitle information;
   the subtitle information containing information associated with a subtitle displaying position which is specified in terms of relative position;
   the subtitle information containing identifying information inserted therein that indicates to which region the subtitle displaying position specified by the information associated with the subtitle displaying position is defined in terms of relative position;
   the receiving apparatus further including
   a control unit configured to control video decoding process to acquire video data by performing a decoding process on the video stream, control subtitle decoding process to acquire bitmap data for a subtitle by performing a decoding process on the subtitle stream, control a display position on the bitmap data for the subtitle on the assumption that the subtitle displaying position specified by the information associated with subtitle displaying position is a relative position with respect to a region indicated by the identifying information inserted into the subtitle information, and control a video superimposing process to superimpose on the video data the bitmap data for the subtitle which has undergone the display position control.
(8) The receiving apparatus as defined in Paragraph (7) above, in which the identifying information inserted into the subtitle information indicates whether the subtitle displaying position specified by the information associated with the subtitle displaying position is a relative position with respect to a video region displayed on a display, a relative position with respect to the video region, or a relative position with respect to a display region.
(9) A receiving method including
   a receiving step of, by a receiving unit, receiving a container of a prescribed format that contains a video stream with video data and a subtitle stream with subtitle information;
   the subtitle information containing information associated with a subtitle displaying position which is specified in terms of relative position;
   the subtitle information containing identifying information inserted therein that indicates to which region the subtitle displaying position specified by the information associated with the subtitle displaying position is defined in terms of relative position;
   the receiving method further including:
   a video decoding step of performing a decoding process on the video stream, thereby obtaining video data;
   a subtitle decoding step of performing a decoding process on the subtitle steam, thereby obtaining bitmap data for a subtitle;
   a control step of controlling a display position on the bitmap data for the subtitle on the assumption that the subtitle displaying position specified by the information associated with subtitle displaying position is a relative position with respect to a region indicated by the identifying information inserted into the subtitle information; and
   a video superimposing step of superimposing on the video data the bitmap data for the subtitle which has undergone the display position control.
(10) A receiving apparatus including
   a receiving unit configured to receive a container of a prescribed format that contains a video stream with video data and a subtitle stream with subtitle information;
   the subtitle information containing information associated with a subtitle displaying position which is specified in terms of relative position;
   the receiving apparatus further including
   a control unit configured to control a video decoding process to acquire video data by performing a decoding process on the video stream, control a subtitle decoding process to acquire bitmap data for a subtitle by performing a decoding process on the subtitle stream, control a display position on the bitmap data for the subtitle on the assumption that the subtitle displaying position specified by the information associated with subtitle displaying position is a relative position with respect to a video region displayed on a display, and control a video superimposing process to superimpose on the video data the bitmap data for the subtitle which has undergone the display position control.
(11) A receiving method including
   a receiving step of, by a receiving unit, receiving a container of a prescribed format that contains a video stream with video data and a subtitle stream with subtitle information;
   the subtitle information containing information associated with a subtitle displaying position which is specified in terms of relative position;
   the receiving method further including:
   a video decoding step of performing a decoding process on the video stream, thereby obtaining video data;
   a subtitle decoding step of performing a decoding process on the subtitle steam, thereby obtaining bitmap data for a subtitle;
   a control step of controlling a display position on the bitmap data for the subtitle on the assumption that the subtitle displaying position specified by the information associated with the subtitle displaying position is a relative position with respect to a video region displayed on a display; and
   a video superimposing step of superimposing on the video data the bitmap data for the subtitle which has undergone the display position control.

The present technology is mainly characterized as follows. Transmission is accomplished in such a way that the subtitle information contains the identifying information that indicates to which region the subtitle displaying position (relative position) specified by the information associated with the subtitle displaying position is defined in terms of relative position. Transmission in this manner permits the receiving side to perform the display position control on the subtitle bitmap data on the assumption that the subtitle displaying position specified by the information associated with the subtitle displaying position is the relative position with respect to the region indicated by the identifying information inserted into the subtitle information. This permits the subtitle to be displayed satisfactorily regardless of the displaying method (see Fig. 7).

### [Reference Signs List]

- 10: Transmitting-receiving system
- 100: Broadcast transmitting system
- 110: Stream generating unit
- 111: Control unit
- 112: Video encoder
- 113: Audio encoder
- 114: Text format converting unit
- 115: Subtitle encoder
- 116: TS formatter
- 200: Television receiver
- 201: Receiver
- 202: TS analyzing unit
- 203: Video decoder
- 204: Video superimposing unit
- 205: Panel driving circuit
- 206: Display panel
- 207: Audio decoder
- 208: Audio output circuit
- 209: Speaker
- 210: Subtitle decoder
- 221: CPU

## Claims

1. A transmitting apparatus comprising
a transmitting unit configured to transmit a container of a prescribed format that contains a video stream with video data and a subtitle stream with subtitle information;
the subtitle information containing information associated with a subtitle displaying position which is specified in terms of relative position;
the transmitting apparatus further comprising
an information inserting unit configured to insert the identifying information that indicates to which region the subtitle displaying position specified by the information associated with the subtitle displaying position is defined in terms of relative position.

2. The transmitting apparatus according to claim 1, wherein the identifying information inserted into the subtitle information indicates whether the subtitle displaying position specified by the information associated with the subtitle displaying position is a relative position with respect to a video region displayed on a display, a relative position with respect to the video region, or a relative position with respect to a display region.

3. The transmitting apparatus according to claim 1, wherein the subtitle information is text information for a subtitle in a prescribed format.

4. The transmitting apparatus according to claim 3, wherein the text information for the subtitle in the prescribed format is TTML or a format derived from TTML.

5. The transmitting apparatus according to claim 4, wherein the information inserting unit defines a name space to insert the identifying information into a tt root container.

6. A transmitting method comprising
a transmitting step of transmitting a container of a prescribed format that contains a video stream with video data and a subtitle stream with subtitle information;
the subtitle information containing information associated with a subtitle displaying position which is specified in terms of relative position;
the transmitting method further comprising
an information inserting step of inserting identifying information that indicates to which region the subtitle displaying position specified by the information associated with the subtitle displaying position is defined in terms of relative position.

7. A receiving apparatus comprising
a receiving unit configured to receive a container of a prescribed format that contains a video stream with video data and a subtitle stream with subtitle information;
the subtitle information containing information associated with a subtitle displaying position which is specified in terms of relative position;
the subtitle information containing identifying information inserted therein that indicates to which region the subtitle displaying position specified by the information associated with the subtitle displaying position is defined in terms of relative position;
the receiving apparatus further comprising
a control unit configured to control video decoding process to acquire video data by performing a decoding process on the video stream, control subtitle decoding process to acquire bitmap data for a subtitle by performing a decoding process on the subtitle stream, control a display position on the bitmap data for the subtitle on the assumption that the subtitle displaying position specified by the information associated with subtitle displaying position is a relative position with respect to a region indicated by the identifying information inserted into the subtitle information, and control a video superimposing process to superimpose on the video data the bitmap data for the subtitle which has undergone the display position control.

8. The receiving apparatus according to claim 7, wherein the identifying information inserted into the subtitle information indicates whether the subtitle displaying position specified by the information associated with the subtitle displaying position is a relative position with respect to a video region displayed on a display, a relative position with respect to the video region, or a relative position with respect to a display region.

9. A receiving method comprising
a receiving step of, by a receiving unit, receiving a container of a prescribed format that contains a video stream with video data and a subtitle stream with subtitle information;
the subtitle information containing information associated with a subtitle displaying position which is specified in terms of relative position;
the subtitle information containing identifying information inserted therein that indicates to which region the subtitle displaying position specified by the information associated with the subtitle displaying position is defined in terms of relative position;
the receiving method further comprising:
a video decoding step of performing a decoding process on the video stream, thereby obtaining video data;
a subtitle decoding step of performing a decoding process on the subtitle steam, thereby obtaining bitmap data for a subtitle;
a control step of controlling a display position on the bitmap data for the subtitle on the assumption that the subtitle displaying position specified by the information associated with subtitle displaying position is a relative position with respect to a region indicated by the identifying information inserted into the subtitle information; and
a video superimposing step of superimposing on the video data the bitmap data for the subtitle which has undergone the display position control.

10. A receiving apparatus comprising
a receiving unit configured to receive a container of a prescribed format that contains a video stream with video data and a subtitle stream with subtitle information;
the subtitle information containing information associated with a subtitle displaying position which is specified in terms of relative position;
the receiving apparatus further comprising
a control unit configured to control a video decoding process to acquire video data by performing a decoding process on the video stream, control a subtitle decoding process to acquire bitmap data for a subtitle by performing a decoding process on the subtitle stream, control a display position on the bitmap data for the subtitle on the assumption that the subtitle displaying position specified by the information associated with subtitle displaying position is a relative position with respect to a video region displayed on a display, and control a video superimposing process to superimpose on the video data the bitmap data for the subtitle which has undergone the display position control.

11. A receiving method comprising
a receiving step of, by a receiving unit, receiving a container of a prescribed format that contains a video stream with video data and a subtitle stream with subtitle information;
the subtitle information containing information associated with a subtitle displaying position which is specified in terms of relative position;
the receiving method further comprising:
a video decoding step of performing a decoding process on the video stream, thereby obtaining video data;
a subtitle decoding step of performing a decoding process on the subtitle steam, thereby obtaining bitmap data for a subtitle;
a control step of controlling a display position on the bitmap data for the subtitle on the assumption that the subtitle displaying position specified by the information associated with the subtitle displaying position is a relative position with respect to a video region displayed on a display; and
a video superimposing step of superimposing on the video data the bitmap data for the subtitle which has undergone the display position control.
